# EUROPEAN PATENT SPECIFICATION

(11) **EP 1 438 867 B1**
(45) Date of publication and mention of the grant of the patent: **23.12.2015**
(21) Application number: 02773048.0
(22) Date of filing: 25.10.2002
(51) Int. Cl.: H04W 24/04

(54) **ENHANCED GGSN RECOVERY HANDLING**
ERWEITERTE GGSN-WIEDERHERSTELLUNGSABWICKLUNG
GESTION DE REPRISE DE RESEAUX GGSN AMELIOREE

(30) Priority: 26.10.2001 NO 20015266; 14.11.2001 US 334625 P; 14.11.2001 US 336080 P
(43) Date of publication of application: 21.07.2004
(73) Proprietor: Telefonaktiebolaget L M Ericsson (publ), 164 83 Stockholm (SE)
(72) Inventor: EVENSEN, Thommy, N-4820 Froland (NO); KAAFARANI, Ezzat, N-4885 Grimstad (NO); NEVERDAL, Jan, Frode, N-4870 Fevik (NO); OLTEDAL, Einar, N-4816 Kolbjørnsvik (NO); TOTH, Stefan, Karl, S-414 59 Göteborg (SE)
(74) Representative: Ericsson
(86) International application number: PCT/NO2002/000388
(87) International publication number: WO 2003/037006

(56) References cited:
- WO-A-00/28749
- US-A- 5 479 481
- US-A1- 2002 006 114
- US-A1- 2002 082 018

## Description

### Field of the invention

The present invention is related to the GPRS core network in mobile packet switched data systems using GSM. The affected GPRS standards are defined by the 3GPP organisation in the standards 23.060 and 29.060.

### Background of the invention

In a data communication network, a Mobile Station (MS) performs attach procedure toward the network in order to access the services and facilities of that network.

After having executed the GPRS attach, the MS may then activate one or more PDP contexts in order to send and receive data.

In order to handle large amount of data, real-time as well as non-real time, GSNs are typically built in a modular fashion with several line input/output IP interface processors. These are handling a set of GTP-U (GPRS Tunneling Protocol - User plane) tunnels, each associated with a PDP Context (GPRS user session) and they are also sometimes called GTPU paths.

According to the current procedure, the SGSN is informed when the GGSN is restarted (ECHO Req/Resp), or the SGSN discovers that the GGSN has restarted (recovery information in signalling messages). The SGSN then deactivates its active PDP contexts and sends a deactivate message for each active PDP context to the MS. The MS must then re-establish each context and the subscriber must re-login to the external data network.

Recovery from a restart in a GGSN will require a lot of signalling, towards all involved MSs and to possible external servers for IP address allocation, as shown in the following example:

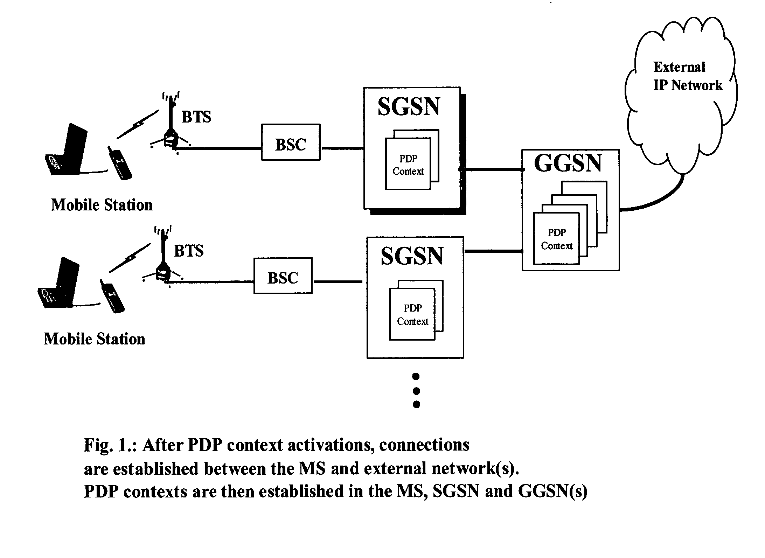

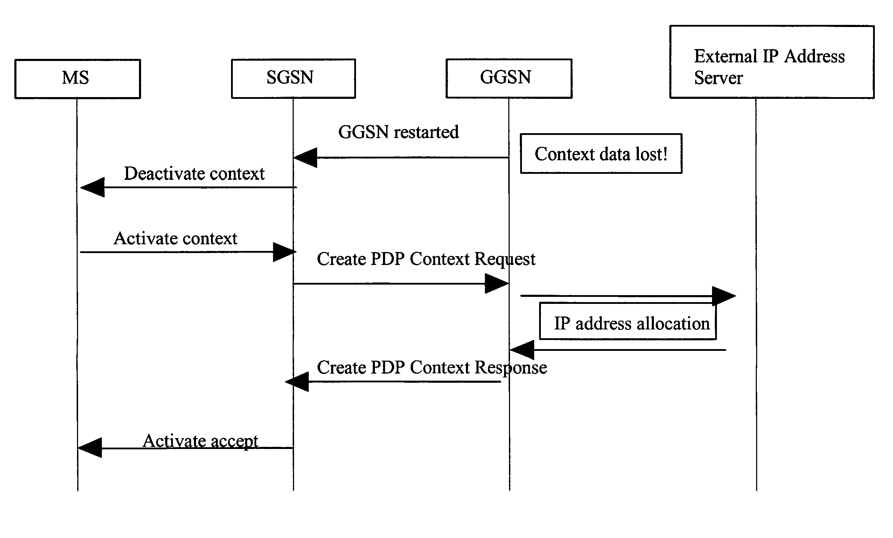

Figures 1 - 3 shows the current solution, which involves the MS and requires signalling both on the radio interface towards the MS and possibly on external interfaces from the GGSN. A GGSN restart will therefore create considerable extra load on the corresponding SGSNs including interactions with the MS. This will reduce the SGSN's capacity to handle normal traffic and the end users will experience service degradation since the GGSN is able to handle several hundred thousands PDP Contexts.

The current 3GPP standards 23.060 and 29.060 describe the solution that involves the SGSN and the MS (as described above).

From the patent application WO 00/28749 A1, it is shown a method for restoring subscriber data by sending the restart counter value of a restarted node (NE1, SGSN) in signalling messages to the peer node (NE2, GGSN). The method

The method is used to identify PDP contexts that have signalling activities AFTER restart in the peer node, thus restoring the PDP context data for those subscribers without additional signalling.

While all other PDP contexts(activated before the restart) are still to be deactivated by sending signalling toward the MS on the air interface (ref. page 5 lines 23 - 26, and page 17 claim 8b). According to the standard, one still HAS to signal toward the MS to deactivate the PDP context and request re-activation. As a result WO 00/28749 A1 will save signalling for new PDP contexts that are activated after the node recover from restart.

One of the problems with the solution described in current standards is the extra load on the SGSN because of signalling towards the MS. When many subscribers are involved, the radio interface will be the bottleneck, and the extra signalling will cause the recovery to take long time.

As indicated above the solution as described in WO 00/28749 A1 will save signalling for new PDP contexts that are activated after the node recovers from restart, however this is only a small fraction of the total active PDP contexts. According to standard, the restarting node shall inform all other nodes it communicates with immediately after recovering of restart, this implies that the time from the recovering of the node to the sending of the Echo Request (new restart counter) is very short. As a result, very few activation requests can be performed.

Further, the end user (MS) will experience service loss as each PDP Context must be deactivated and then reactivated, i.e. connections to the already logged on data sessions are lost.

In addition, extra signalling is required to and from the MS and between the GGSN and its external servers.

### Summary of the invention

In contrast to the above discussed problems it is an object of the present invention to provide a method that does not use the mechanism to send the restart counter to help the peer node to identify the PDP contexts that are activated after restart so that they can be restored. The present invention simply utilizes the fact that the peer node (NE1) still has the valid data for all the PDP contexts that were lost in the restarted node (NE2). According to the present invention, these data are used to restore all the

PDP context in NE2 without signalling toward the MS, thus saving resources on the air interface.

Further it is an object to provide a method that eliminates the other problems as known from the prior art and as described above. The features defined in the claims enclosed characterize this method.

### Brief description of the drawings

In order to make the invention more readily understandable, the discussion that follows will refer to the accompanying drawings.
Figure 1 shows the situation after PDP activations in a GPRS network,
Figure 2 shows how a restart in a GGSN causes interaction between the GGSN and the SGSN, and between the SGSN and an attached MS,
Figure 3 shows the message flow during a PDP context re-establishment according to current standard,

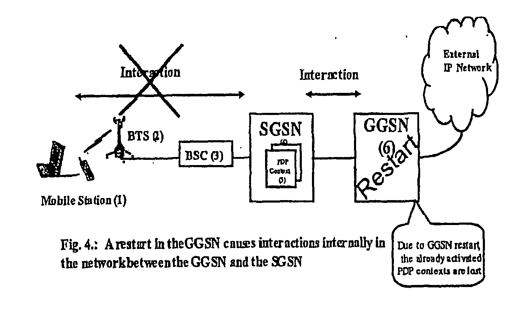

Figure 4 shows a restart in a GGSN avoiding interaction between the SGSN and an attached MS according to the present invention,
Figure 5 shows the message flow during a PDP context re-establishment according to the present invention,
Figure 6 shows a GTP-C tunnel and a number of GTP-U tunnels between the GGSN and the SGSN,
Figure 7 shows the message flow when detecting partial GSN restarts in a modular configuration of GSNs.

### Detailed description of preferred embodiments

From an MS point of view, a GGSN is an internal node in the Core Network. The Core Network should be able to recover from faults without involving the MS.

The present invention proposes a new PDP Context re-establishment procedure between a SGSN and a GGSN triggered by SGSN after a GGSN restart. According to the invention, the procedure indicates to the GGSN that it is a re-establishment of the previously active PDP Context (and not creation of a new PDP Context).

By using this new procedure, the PDP Contexts are reactivated in GGSN without involving the MS.

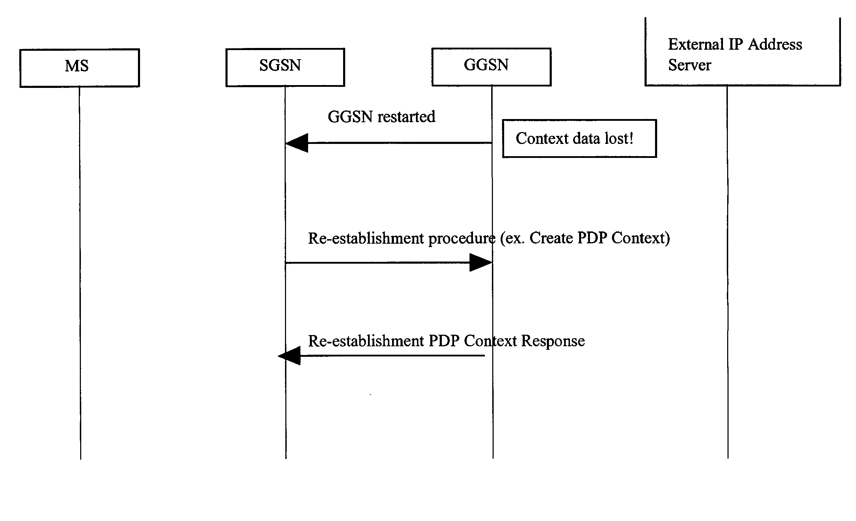

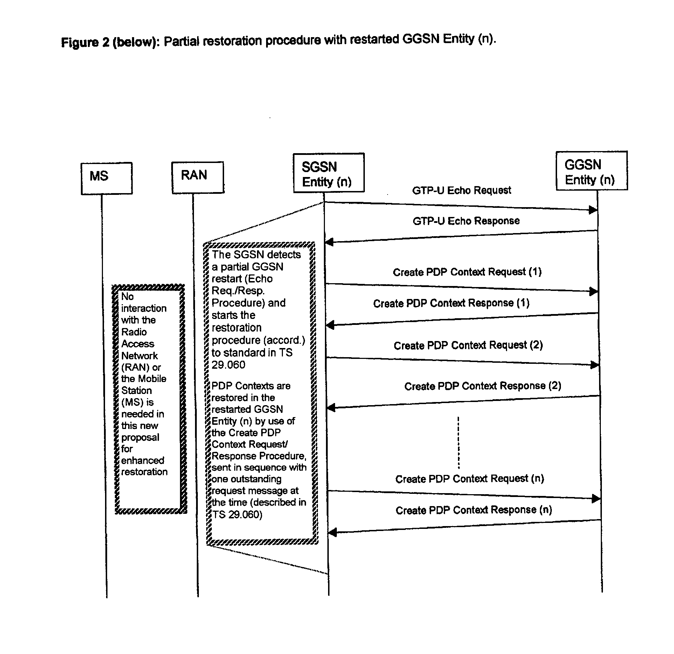

The proposed PDP Context re-establishment procedure can be executed by using the existing Create PDP Context Request/Response procedure with some minor modifications, as shown in figure 5:
Information about a GGSN restart is conveyed as before in one of the following messages:
   - Create PDP Context Response
   - Update PDP Context Response
   - Echo Response

These messages all contain a recovery information field that tells if the other node has restarted.

As shown in figure 5, the invention provides a simplified recovery for a live PDP context. In this example, the re-establishment procedure is handled by a modification in the existing Create PDP Context procedure.

The re-established PDP Context must use the same IP address as before the GGSN restart. It can be either a fixed IP address or a dynamic IP address. This information is stored in the SGSN when a context is activated and can therefore be sent to the GGSN from the SGSN in the new procedure. To achieve this, the re-establishment procedure is based on information stored in SGSN, and at least the following SGSN information must be included in the re-establishment procedure:
- IP address in use for the PDP Context
- Selected APN
- Negotiated QoS

For other relevant parameters, see section 13 Information Storage in 23.060.

If existing Create PDP Context Request message is used for re-establishing the PDP Context in GGSN, the message must in addition contain an indication (e.g. a flag) informing the GGSN that this is re-creation of a previously active PDP Context. If the flag is set, then it indicates that this Create PDP Context Request message is a re-establishment of an already activated PDP Context. If the flag is not set, then it means that this is creation of a new PDP Context.

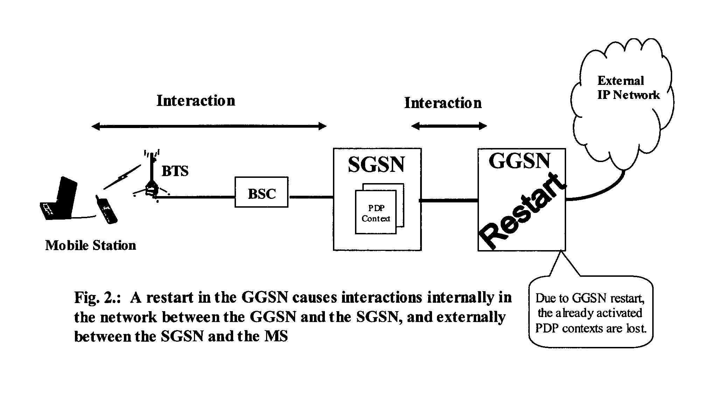

In a preferred embodiment of the present invention, in order to detect a partial/modular GSN (either SGSN or GGSN) restart, a 'Restart counter' is included also in the GTP-U Echo Response message in TS 29.060. This makes it possible to detect the partial/modular restart (in the same way as specified today in 3GPP TS 23.007 for the "total" GSN restart). In this case, the GTP-U Echo Request/Response messages are sent on each GTP-U path between peer SGSNs and GGSNs to detect partial GGSN restarts in a modular configuration of GSNs (see also figures 1 and 2). If there is a partial/modular GGSN restart detected by the SGSN, only those PDP Contexts affected by this restart become invalid and may be deleted. After the SGSN has detected the partial/modular GGSN restart, it can immediately start to go through all its active PDP Contexts to detect which of them are affected. That means those PDP contexts having a GTP-U tunnel with an endpoint with a GGSN address that equals the GGSN entity that had a restart. Only for the affected PDP Contexts, the SGSN now starts a restoration procedure in order to restore these PDP Contexts in the GGSN. This is done in order for the GPRS to resume back to normal for the user. For the restoration, the Tunnel Management procedure, as described in 3GPP TS 29.060, transferring the Create PDP Context Request and Create PDP Context Response messages between SGSN and GGSN is used. In order not to overload the recently restarted GGSN entity, the SGSN should only have one outstanding Create PDP Context Request message at the time, i.e. it should always await a Response message before transmitting a new Request message.

If there is a partial/modular SGSN restart, only those PDP Contexts affected by this restart become invalid and may be deleted. All other PDP Contexts should be considered fully operational and those users will not be affected. For only those PDP Contexts affected by the partial/modular SGSN restart, the restoration procedure as specified in 3GPP TS 23.007 is performed.

By introducing the invention suggested in this document, the following advantages are foreseen:
- Simplified and faster recovery procedures when a GGSN looses its PDP Context information.
- Reduced signalling and load on the MS, SGSN and GGSN in case of GGSN restart.
- No service loss to the MSs involved.

The solution described above is applicable both for 2^{nd} (GSM) and 3^{rd} (UMTS) generation network systems, as defined by the 3GPP organisation.

## Claims

1. Method in a packet switched cellular network comprising service support nodes (4) and gateway support nodes (6), wherein data sessions (5) associated with terminals (1) connected to the network are established, maintained and terminated in the gateway support nodes (6) and provided to the terminals (1) by the respective service support nodes (4), and when one of the gateway support nodes (6) executes a restart, an associated service support node (4) will be informed about the restart by means of general signalling messages from the gateway support node (6),
**characterized in** the following steps:
when said associated service support node (4) is being informed about the restart, generating a message for each session (5) associated with terminals (1) attached to the service support node (4), said message requesting the gateway support node (6) to re-establish each of said sessions (5) in the gateway support node (6),
upon receiving the message in the gateway support node (6), re-establishing a session (5) corresponding to that message without signalling to terminals (1).

2. Method according to claim 1,
**characterized in that** the packet switched cellular network is a GPRS network, the serving support nodes are SGSN nodes (4), the gateway support nodes are GGSN nodes (6) and the sessions are PDP Contexts (5).

3. Method according to claim 2,
**characterized in that** said message is a create PDP context request containing a flag indicating that the request concerns a re-establishment of a previously active PDP Context (5).

4. Method according to one of the preceding claims,
**characterized in that** the create PDP context request includes an IP address of the terminal associated to the PDP Context (5), the IP address is fetched from the serving support node (4) and is the same as previous to the restart.

5. Method according to one of the preceding claims,
**characterized in that** the restart is detected by means of a Restart counter included in a GTP-U Echo Response message transmitted from a restarted gateway support node (6).

6. Method according to one of the preceding claims,
**characterized in that** when a service support node (4) detects a restart of a gateway support node (6), it starts detecting which of its active context(s) (5) being affected by investigating which of them having a GTP-U tunnel end point with the address of the restarted gateway support node (6).

## Patentansprüche

1. Verfahren für ein paketvermitteltes Mobilfunknetz, aufweisend Dienstunterstützungsknoten (4) und Zugangsunterstützungsknoten (6),
wobei zu Endgeräten (1), die mit dem Netzwerk verbunden sind, zugehörige Datensitzungen (5) in den Zugangsunterstützungsknoten (6) aufgebaut, erhalten und beendet werden, und den Endgeräten (1) über die jeweiligen Dienstunterstützungsknoten (4) bereitgestellt werden, und
wobei, wenn einer von den Zugangsunterstützungsknoten (6) einen Neustart durchführt, ein zugehöriger Dienstunterstützungsknoten (4) mittels allgemeiner Signalnachrichten von dem Zugangsunterstützungsknoten (6) über den Neustart informiert wird,
**gekennzeichnet durch** die folgenden Schritte:
Erzeugen einer Nachricht für jede zu Endgeräten (1), die mit dem Dienstunterstützungsknoten (4) verbunden sind, zugehörige Sitzung (5), wenn der zugehörige Dienstunterstützungsknoten (4) über den Neustart informiert wird, wobei die Nachricht den Zugangsunterstützungsknoten (6) ersucht, jede der Sitzungen (5) in dem Zugangsunterstützungsknoten (6) wiederherzustellen,
nach dem Empfangen der Nachricht in dem Zugangsunterstützungsknoten (6), Wiederherstellen einer zu der Nachricht korrespondierenden Sitzung (5), ohne Signalgebung an die Endgeräte (1).

2. Verfahren nach Anspruch 1, **dadurch gekennzeichnet, dass** das paketvermittelte Mobilfunknetz ein GPRS - Netzwerk ist, die Dienstunterstützungsknoten SGSN - Knoten (4) sind, die Zugangsunterstützungsknoten GGSN - Knoten (6) sind und die Sitzungen PDP - Kontexte (5) sind.

3. Verfahren nach Anspruch 2, **dadurch gekennzeichnet, dass** die Nachricht eine Anfrage für das Erzeugen von einem PDP - Kontext ist, die eine Markierung enthält, die anzeigt, dass die Anfrage das Wiederherstellen von einem zuvor aktiven PDP - Kontext (5) betrifft.

4. Verfahren nach einem der vorangehenden Ansprüche, **dadurch gekennzeichnet, dass** die Anfrage für das Erzeugen von einem PDP - Kontext eine IP - Adresse von dem zu dem PDP - Kontext (5) zugehörigen Endgerät aufweist, wobei die IP - Adresse von dem Dienstunterstützungsknoten (4) abgerufen wird und dieselbe ist, wie vor dem Neustart.

5. Verfahren nach einem der vorangehenden Ansprüche, **dadurch gekennzeichnet, dass** der Neustart mittels eines Neustart - Zählers erkannt wird, der in einer GTP - U - Echo - Antwortnachricht enthalten ist, die von einem neu gestarteten Zugangsunterstützungsknoten (6) übertragen wird.

6. Verfahren nach einem der vorangehenden Ansprüche, **dadurch gekennzeichnet, dass** ein Dienstunterstützungsknoten (4), wenn er den Neustart von einem Zugangsunterstützungsknoten (6) erkennt, zu detektieren beginnt, welche(r) von seinen aktiven Kontexten (5) betroffen ist, indem er untersucht, welche von ihnen einen GTP-U-Tunnelendpunkt mit der Adresse von dem neu gestarteten Zugangsunterstützungsknoten (6) aufweisen.

## Revendications

1. Procédé dans un réseau cellulaire à commutation de paquets comprenant des noeuds de support de service (4) et des noeuds de support de passerelle (6), dans lequel des séances de données (5) associées à des terminaux (1) connectés au réseau sont établies, entretenues et terminées dans les noeuds de support de passerelle (6) et fournies aux terminaux (1) par les noeuds de support de service respectifs (4) et, lorsque l'un des noeuds de support de passerelle (6) exécute une relance, un noeud de support de service associé (4) sera informé sur la relance au moyen de messages de signalisation généraux provenant du noeud de support de passerelle (6),
**caractérisé par** les étapes suivantes :
lorsque ledit noeud de support de service associé (4) est informé à propos de la relance, on génère un message pour chaque séance (5) associée à des terminaux (1) fixés au noeud de support de service (4), ledit message demandant au noeud de support de passerelle (6) de rétablir chacune desdites séances (5) dans le noeud de support de passerelle (6),
lors de la réception du message dans le noeud de support de passerelle (6), on rétablit une séance (5) correspondant à ce message sans signalisation aux terminaux (1).

2. Procédé selon la revendication 1,
**caractérisé en ce que** le réseau cellulaire à commutation de paquets est un réseau GPRS, les noeuds de support de service sont des noeuds SGSN (4), les noeuds de support de passerelle sont des noeuds GGSN (6) et les séances sont des contextes PDP (5).

3. Procédé selon la revendication 2,
**caractérisé en ce que** ledit message est une demande de création d'un contexte PDP contenant un pavillon indiquant que la demande concerne un rétablissement d'un contexte PDP précédemment actif (5).

4. Procédé selon l'une quelconque des revendications précédentes, **caractérisé en ce que** la demande de création d'un contexte PDP comprend une adresse IP du terminal associé au contexte PDP (5), l'adresse IP est extraite du noeud de support de service (4) et est le même qu'antérieurement à la relance.

5. Procédé selon l'une quelconque des revendications précédentes, **caractérisé en ce que** la relance est détectée au moyen d'un compteur de relance compris dans un message réponse d'écho GTP-U transmis par un noeud de support de passerelle relancé (6).

6. Procédé selon l'une quelconque des revendications précédentes, **caractérisé en ce que**, lorsqu'un noeud de support de service (4) détecte une relance d'un noeud de support de passerelle (6), il commence par détecter lequel de ses contextes actifs (5) est affecté en recherchant lequel d'entre eux présente un point d'extrémité de tunnel GTP-U avec l'adresse du noeud de support de passerelle relancé (6).
